# FASCICULE DE BREVET EUROPEEN

(11) **EP 2 509 860 B1**
(45) Date de publication et mention de la délivrance du brevet: **19.07.2017**
(21) Numéro de dépôt: 10787757.3
(22) Date de dépôt: 06.12.2010
(51) Int. Cl.: B64C 11/06, F04D 29/36

(54) **MOYEU D'HÉLICE À ANNEAU POLYGONAL RENFORCE ET TURBOMACHINE ÉQUIPÉE D'UN TEL MOYEU**
PROPELLERNABE MIT VERSTÄRKTEM POLYGONALRING UND TURBOMASCHINE AUSGESTATTET MIT DER NABE
PROPELLER HUB PROVIDED WITH REINFORCED POLYGONAL RING AND TURBOMASHINE EQUIPPED WITH SAID HUB

(30) Priorité: 07.12.2009 FR 0958699; 07.12.2009 FR 0958700
(43) Date de publication de la demande: 17.10.2012
(73) Titulaire: Safran Aircraft Engines, 75015 Paris (FR)
(72) Inventeur: BOSTON, Eric, Jacques, F-77240 Cesson (FR); BOURU, Michel, André, F-77950 Montereau sur le Jard (FR); JABLONSKI, Laurent, F-77000 Melun (FR); JOLY, Philippe, Gérard, Edmond, F-77000 Vaux le Penil (FR)
(74) Mandataire: Gevers & Orès
(86) Numéro de dépôt international: PCT/EP2010/069008
(87) Numéro de publication internationale: WO 2011/069981

(56) Documents cités:
- EP-A1- 0 267 097
- DE-A1- 4 017 586
- FR-A1- 2 641 251
- FR-A1- 2 645 499
- GB-A- 2 226 087
- US-A- 5 224 831
- US-A- 5 263 898

## Description

La présente invention concerne un moyeu d'hélice à pales à calage variable pour une turbomachine du type à soufflante non carénée (en anglais « open rotor » ou « unducted fan »).

La soufflante d'une turbomachine de ce type comprend typiquement deux hélices externes coaxiales et contrarotatives, respectivement amont et aval, qui sont chacune entraînées en rotation par une turbine de la turbomachine et qui s'étendent sensiblement radialement à l'extérieur de la nacelle de cette turbomachine.

Chaque hélice comprend usuellement un moyeu du type comportant un anneau polygonal de support desdites pales, concentrique à l'axe longitudinal de la turbomachine et composé de deux flancs annulaires d'extrémité espacés parallèlement l'un de l'autre et entre lesquels sont diamétralement solidarisées, par des zones d'enracinement issus des flancs annulaires, des bagues à logements cylindriques radiaux pour la réception desdites pales. Les bagues sont équi-angulairement réparties en périphérie latérale de l'anneau polygonal et séparées les unes des autres par des zones intermédiaires planes à évidements (ou ouvertures) traversants, et un moyen de liaison relie l'anneau polygonal à un élément de rotor de turbine de la turbomachine. Le document FR 2 641 251 enseigne un tel moyeu d'hélice.

Les pales peuvent tourner dans les logements des bagues de l'anneau polygonal et sont pour cela entraînées en rotation autour des axes des pales par des moyens appropriés de façon à régler le calage angulaire des pales, et à l'optimiser en fonction des conditions de fonctionnement de la turbomachine.

En fonctionnement, les pièces tournantes de la turbomachine, et notamment le moyeu et les pales de l'hélice, sont soumises, à des degrés divers, à des contraintes importantes qu'elles soient d'ordre mécanique, thermique, aérodynamique, etc.... En particulier, les logements cylindriques des pales tendent à se déformer sous les efforts importants qui s'exercent au niveau des bagues radiales de l'anneau polygonal, jusqu'à prendre une configuration ovale. En effet, comme les zones d'enracinement ou de liaison des bagues sur les flancs annulaires sont larges et s'étendent sur une portion périphérique importante des bagues pour des raisons de tenue et de rigidité mécaniques, les efforts de traction exercés par ces flancs sur les bagues provoquent une ovalisation de celles-ci. Ainsi, les pistes de roulement des paliers, qui sont prévus entre le logement cylindrique de chaque bague et un dispositif rotatif (à platine et couronne notamment) portant la pale et permettant de faire varier le calage de celle-ci, risquent de se détériorer rapidement jusqu'à ne plus garantir un fonctionnement correct des pales, avec les conséquences que cela peut entraîner.

De plus, pour alléger la masse de l'anneau polygonal qui peut avoir un diamètre supérieur au mètre, les zones intermédiaires de la périphérie latérale de l'anneau, sont pourvues des évidements traversants ménagés alternativement et consécutivement entre les bagues à logements de réception radiaux des pales. De la sorte, le gain de masse est significatif sans pour cela nuire aux caractéristiques mécaniques de l'anneau polygonal.

Par ailleurs, l'emploi des matériaux composites se développe de plus en plus, là aussi à des fins d'allégement des pièces et également de rigidité et longévité. Aussi, les pales des hélices sont-elles réalisées avantageusement en ces matériaux composites.

Cependant, on a remarqué que, en fonctionnement, les pieds des pales, reliés au côté extérieur de l'anneau polygonal, par opposition à son côté intérieur tourné vers les turbines, sont soumis à des températures relativement élevées dues notamment à la circulation de l'air chaud des circuits de ventilation des éléments de turbine. En effet, une partie de cet air chaud passe par les évidements traversants des zones intermédiaires de l'anneau polygonal et circule autour des pieds des pales en réchauffant ces derniers. Les matériaux composites des pales sont incompatibles avec ces températures. Par ailleurs, les gaz de combustion traversant coaxialement la turbomachine participent à maintenir ces niveaux de température élevés notamment par conduction à travers les pièces elles-mêmes, malgré la présence des circuits de ventilation.

La présente invention a pour but de remédier à ces inconvénients et concerne un moyeu d'hélice à pales à calage variable dont la conception dudit anneau polygonal garantit notamment l'absence de déformation des logements cylindriques des bagues.

A cet effet, le moyeu d'hélice à pales à calage variable pour une turbomachine à axe longitudinal, du type comportant :
- un anneau polygonal de support des pales, concentrique à l'axe longitudinal et composé de deux flancs annulaires d'extrémité espacés parallèlement l'un de l'autre et entre lesquels sont diamétralement solidarisées, par des zones d'enracinement issues desdits flancs annulaires, des bagues à logements cylindriques radiaux pour la réception des pales, lesdites bagues étant équi-angulairement réparties en périphérie latérale de l'anneau polygonal et séparées les unes des autres par des zones intermédiaires à évidements traversants, et
- un moyen de liaison reliant l'anneau polygonal à un élément de rotor de turbine de la turbomachine,
est remarquable, selon l'invention, par le fait que les zones intermédiaires définies entre deux bagues consécutives et les flancs annulaires d'extrémité, comportent des éléments de renfort des bagues, qui sont agencés radialement et/ou tangentiellement et solidaires au moins des parois latérales des deux bagues consécutives.

Dans un mode de réalisation, selon la revendication 1, lorsqu'ils sont agencés radialement, sensiblement parallèlement auxdits flancs annulaires d'extrémité, les éléments de renfort se présentent chacun sous la forme d'une plaque mince rigide, disposée radialement dans l'évidement traversant de la partie intermédiaire et solidaire, par ses bords latéraux, des parois latérales correspondantes des deux bagues consécutives.

Ainsi, grâce à l'invention, les éléments de renfort à plaques radiales constituent des nervures de raidissement qui, de par leur disposition entre deux bagues consécutives, perpendiculairement à la liaison diamétrale de celles-ci aux flancs annulaires d'extrémité par les zones d'enracinement, empêchent l'ovalisation desdites bagues et, donc, celle des logements cylindriques radiaux par suite des contraintes exercées. Ces dernières sont donc reprises sans déformation des bagues. Et les pistes de roulement des paliers prévus sur les dispositifs rotatifs des pales conservent leur intégrité.

On remarquera aussi la simplicité de réalisation des éléments de renfort qui, outre le fait d'empêcher la déformation des bagues, n'entraîne pas un surpoids significatif de l'anneau (plaques minces), justifiant la présence des évidements traversants dans celui-ci, d'autant plus que les zones d'enracinement sont réduites.

Avantageusement, lesdites zones d'enracinement des flancs annulaires d'extrémité sur les bagues peuvent avoir une épaisseur réduite du fait de la présence desdits éléments de renfort. Ainsi, même si cela entraîne moins d'opposition au mouvement pendulaire dû aux pales (aubes), le risque de déformation au niveau des zones d'enracinement d'épaisseur réduite est supprimé par les éléments de renfort qui s'opposent à ce mouvement pendulaire, et évitent l'ovalisation des bagues. Par exemple, l'épaisseur des zones d'enracinement est sensiblement de l'ordre de celle desdits éléments de renfort ou de celle desdites bagues.

De préférence, les éléments de renfort à plaques des bagues sont situés dans le plan médian radial dudit anneau polygonal, perpendiculaire à l'axe longitudinal et contenant les axes géométriques des logements cylindriques radiaux de réception des pales, et à égale distance des deux flancs annulaires d'extrémité dudit anneau. Ainsi, chaque bague est maintenue rigidement par quatre liaisons perpendiculaires les unes des autres (deux avec les zones d'enracinement des flancs annulaires d'extrémité, deux avec les éléments de renfort des bagues), conférant à chacune des bagues une rigidité satisfaisante. L'ensemble des éléments de renfort forme ainsi un disque de rigidification des bagues empêchant l'ovalisation de leur logement.

Avantageusement, lesdits éléments de renfort à plaques s'étendent radialement sur toute la hauteur desdites bagues. De la sorte, l'objectif de réduire au mieux la déformation des logements des bagues et de renforcer leur tenue aux efforts de fonctionnement est atteint.

Dans un autre mode de réalisation, selon la revendication 6, lorsqu'ils sont agencés tangentiellement, les éléments de renfort obturent les évidements traversants des zones intermédiaires définies entre lesdites bagues consécutives et lesdits flancs annulaires d'extrémité, ladite périphérie latérale dudit anneau polygonal étant sensiblement pleine et continue.

Ainsi, la communication entre le côté intérieur dudit anneau polygonal tourné vers ladite turbomachine et le côté extérieur tourné vers lesdites pales, est empêchée.

Grâce à la conception fermée de la périphérie latérale dudit anneau, les circuits de ventilation sont canalisés et confinés du côté interne de l'anneau polygonal en circulant ainsi vers l'aval de la turbomachine, sans traverser celui-ci. De la sorte, on peut utiliser en toute sécurité des pales avec des pieds en matériau composite pour leurs nombreux avantages et éviter la détérioration des pieds.

Dans un exemple préféré de réalisation, les éléments de renfort tangentiels se présentent chacun sous la forme d'un voile de matière mince, l'ensemble desdits voiles obturant ladite périphérie latérale dudit anneau polygonal. Cette réalisation permet ainsi de minimiser l'augmentation de masse dudit anneau polygonal tout en séparant la circulation des gaz chaud entre le côté intérieur de l'anneau polygonal et le côté extérieur de celui-ci portant les pales composites.

En particulier, lesdits voiles minces sont situés sensiblement au milieu de l'épaisseur de l'anneau polygonal.

Avantageusement, lesdites zones d'enracinement issues des flancs annulaires d'extrémité et reliant diamétralement les bagues ont une épaisseur réduite. L'épaisseur réduite de ces zones correspond par exemple sensiblement à celle des bagues.

Ainsi, non seulement les voiles agencés dans les zones intermédiaires de la paroi latérale de l'anneau font office d'écran thermique vis-à-vis des pieds de pale, mais également jouent le rôle de raidisseurs vis-à-vis des bagues et des zones d'enracinement.

En effet, ces dernières sont usuellement larges et s'étendent sur une portion périphérique importante des bagues pour des raisons de tenue et de rigidité mécaniques, de sorte que les efforts de traction exercés par ces flancs sur les bagues peuvent provoquer une ovalisation de celles-ci. Et, par voie de conséquence, les pistes de roulement des paliers, qui sont prévus entre le logement cylindrique de chaque bague et un dispositif rotatif portant la pale et permettant de faire varier le calage de celle-ci, risquent de se détériorer rapidement jusqu'à ne plus garantir un fonctionnement correct des pales, avec les conséquences que cela peut entraîner.

En réduisant l'étendue (épaisseur) de ces zones d'enracinement, l'influence des efforts de traction est diminuée supprimant les risques d'ovalisation des bagues; et les risques de déformation des zones d'enracinement alors réduites, pouvant être engendrées par la moindre opposition de celles-ci au mouvement pendulaire dû aux pales, sont contrées par les voiles tangentiels agencés dans les zones intermédiaires en périphérie latérale dudit anneau.

Dans encore un autre mode de réalisation, chaque élément de renfort se présente sous la forme de deux plaques minces rigides, perpendiculaires l'une par rapport à l'autre en définissant une section transversale en croix, l'une des plaques étant agencée radialement dans l'évidement traversant en reliant les deux bagues correspondantes, et l'autre plaque perpendiculaire étant agencée tangentiellement en périphérie latérale de l'anneau polygonal en reliant les flancs annulaires d'extrémité de l'anneau polygonal pour obturer ainsi l'évidement traversant.

Ainsi, non seulement la rigidité des bagues est encore renforcée, supprimant leur déformation, mais en outre, avec la fermeture des évidements traversants, on empêche une partie des gaz chauds de ventilation circulant dans les tuyères de la turbomachine, de passer par les évidements depuis le côté intérieur de l'anneau, où se trouvent les turbines, vers le côté extérieur, où se trouvent les pales de l'hélice, et de surchauffer les pieds des pales, sensibles aux températures élevées compte tenu de leur réalisation en matériau composite.

De préférence, les éléments de renfort, qu'ils soient radiaux et/ou tangentiels, sont intégrés à l'anneau polygonal. La totalité de celui-ci est ainsi obtenu directement, d'un seul tenant, par des techniques de laminage et usinage. Bien évidemment, lesdits éléments de renfort peuvent être aussi rapportés fixement à l'anneau polygonal, après l'obtention de celui-ci.

L'invention concerne également une turbomachine du type à soufflante non carénée. Avantageusement, elle comprend un moyeu d'hélice de ladite soufflante, tel que défini ci-dessus.

Les figures du dessin annexé feront bien comprendre comment l'invention peut être réalisée. Sur ces figures, des références identiques désignent des éléments semblables.
La figure 1 est une vue en coupe longitudinale schématique d'une turbomachine du type à hélices non carénées.
La figure 2 montre une vue en perspective partielle de l'hélice amont de ladite turbomachine, avec son anneau polygonal de moyeu portant les pales de l'hélice et équipé d'éléments de renfort radiaux.
La figure 3 est une vue agrandie partielle de l'anneau polygonal de la figure 2, montrant les éléments de renfort radiaux à plaques minces pour les bagues de support des pales.
La figure 4 est une coupe transversale selon le plan A-A de la figure 3 de l'élément de renfort.
La figure 5 montre une vue en perspective partielle de l'hélice amont de la turbomachine, avec son anneau polygonal de moyeu portant les pales de l'hélice et équipé d'éléments de renfort tangentiels.
La figure 6 est une vue agrandie partielle de l'anneau de moyeu de la figure 5, dépourvu des pales correspondantes et montrant l'élément de renfort tangentiel à voile de matière, reliant les bagues à logements de réception des pales.
La figure 7 est une coupe radiale dudit anneau polygonal selon le plan A-A de la figure 6.
La figure 8 montre, en coupe transversale analogue à la figure 4, une variante de réalisation dudit élément de renfort à la fois radial et tangentiel.

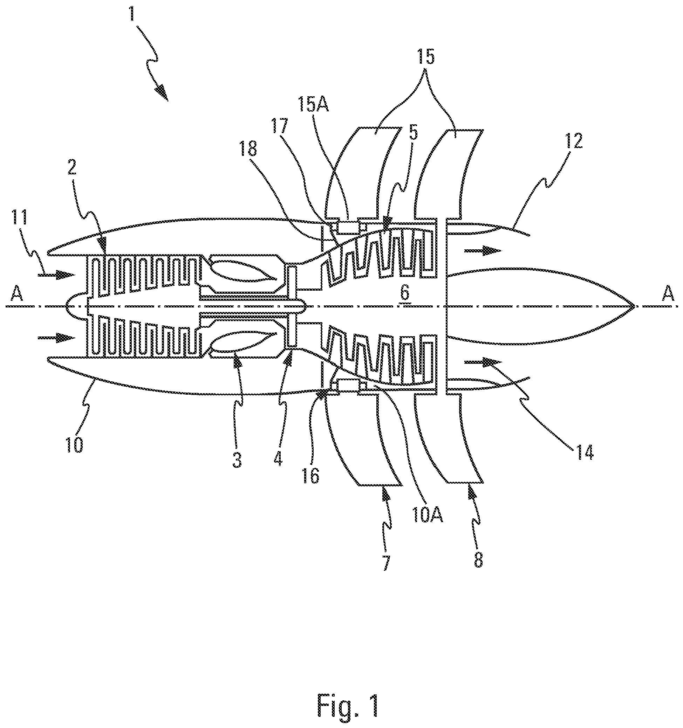

On se réfère d'abord à la figure 1 qui représente une turbomachine 1 à soufflante non carénée (en anglais « open rotor » ou « unducted fan ») qui comporte d'amont en aval, dans le sens d'écoulement des gaz à l'intérieur de la turbomachine d'axe longitudinal A, un compresseur 2, une chambre annulaire de combustion 3, une turbine haute pression 4, et deux turbines basse pression 5, 6 qui sont contrarotatives, c'est-à-dire qu'elles tournent dans deux sens opposés autour de l'axe longitudinal A de la turbomachine.

Chacune de ces turbines aval 5, 6 est solidaire en rotation d'une hélice externe 7, 8 s'étendant radialement à l'extérieur de la nacelle 10 de la turbomachine, cette nacelle 10 étant sensiblement cylindrique et s'étendant le long de l'axe A autour du compresseur 2, de la chambre de combustion 3, et des turbines 4, 5 et 6.

Le flux d'air 11 qui pénètre dans la turbomachine est comprimé puis est mélangé à du carburant et brûlé dans la chambre de combustion 3, les gaz de combustion passant ensuite dans les turbines pour entraîner en rotation les hélices 7,8 qui fournissent la majeure partie de la poussée engendrée par la turbomachine. Les gaz de combustion sortant des turbines sont expulsés à travers une tuyère 12 (flèches 14) pour augmenter la poussée.

Les hélices 7, 8 sont disposées coaxialement l'une derrière l'autre et comportent une pluralité de pales 15 régulièrement réparties autour de l'axe longitudinal A de la turbomachine 1. Ces pales 15 s'étendent sensiblement radialement et sont du type à calage variable, c'est-à-dire qu'elles peuvent tourner autour de leurs axes de façon à optimiser leur position angulaire en fonction des conditions de fonctionnement de la turbomachine.

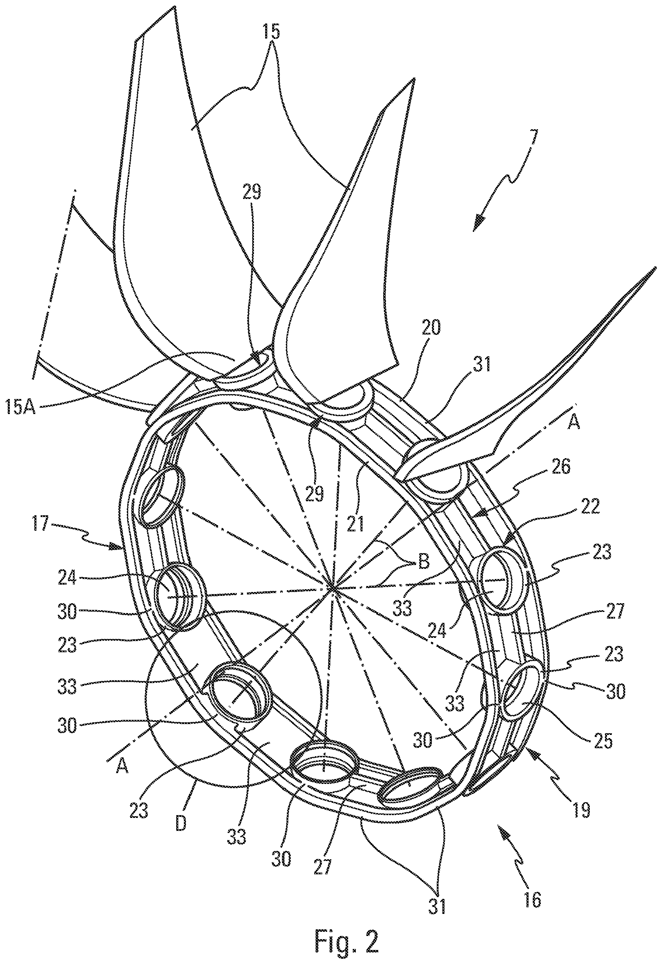

Dans un montage connu, décrit notamment dans le document US-A-5 263 898, chaque hélice 7, 8 comprend un moyeu rotatif ou élément de rotor 16 formé principalement par un anneau polygonal 17 supportant les pales 15 et disposé de façon concentrique à l'axe longitudinal A de la turbomachine 1, perpendiculairement à ce dernier. Par exemple, sur l'hélice amont 7 représentée sur les figures 1 et 2, l'anneau polygonal 17 du moyeu 16 se trouve dans la partie rotative correspondante 10A de la nacelle 10 et est relié à celle-ci par un moyen de liaison approprié symbolisé en 18 sur la figure 1.

Cet anneau polygonal 17 de support des pales 15 est généralement structurellement monobloc et sa périphérie latérale 19 se compose de deux flancs (ou parties) annulaires polygonaux d'extrémité 20 et 21 parallèles entre eux et reliés l'un à l'autre par des parties intermédiaires cylindriques 22, telles que des bagues (ou fûts) radiales 23. Celles-ci sont disposées de manière équi-angulairement répartie à la périphérie latérale ainsi formée 19 de l'anneau 17 et les parois latérales 25 des bagues définissent des logements cylindriques radiaux 24 dont les axes B convergent, dans un même plan radial, vers l'axe longitudinal A de la turbomachine 1, et qui sont destinés à recevoir des dispositifs de montage 29 des pales.

Plus particulièrement, ces dispositifs de montage 29 sont montrés de façon schématique et extérieure sur la figure 2 et sont par exemple décrits en détail en référence au document US-A-5 263 898. Brièvement, chaque dispositif 29 porte, d'un côté, le pied 15A de la pale 15, tandis qu'il s'engage, de l'autre côté, dans le logement 24 de la bague 23. Des paliers non représentés, prévus dans le logement, assurent la rotation, par des moyens appropriés non illustrés, du dispositif de montage par rapport au logement de l'anneau. Ainsi, en fonction de la vitesse et des phases de vol de l'avion, on peut modifier le calage des pales par une commande globale agissant sur les moyens de rotation des pales.

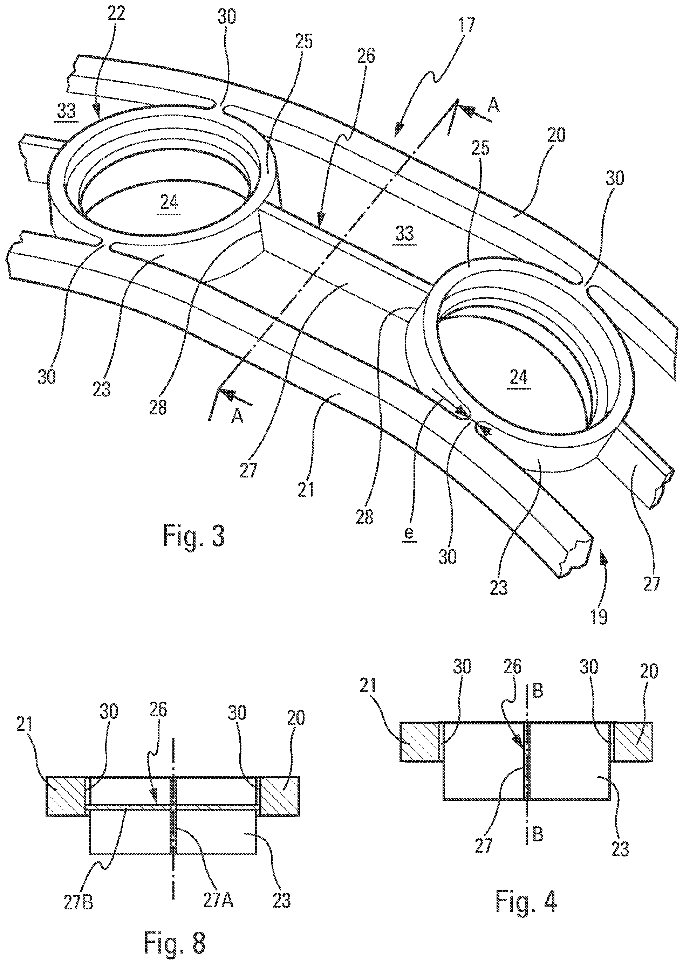

De plus, comme on le voit sur les figures 2 et 3, les parois latérales 25 des bagues cylindriques 23 sont solidaires des flancs annulaires d'extrémité 20,21 par des zones d'enracinement ou de liaison 30 prévues en opposition diamétrale sur la périphérie latérale 19 de l'anneau polygonal 17 et ayant une hauteur de préférence identique à celle des flancs annulaires d'extrémité. On remarque par ailleurs, sur la figure 2, que les logements de réception 24 des dispositifs de montage 29 des pales 15 sont situés aux sommets d'intersection des zones planes 31 ( au nombre de douze dans cet exemple) de la périphérie latérale polygonale 19 de l'anneau dont la réalisation s'effectue d'un seul tenant notamment par des techniques de laminage et d'usinage appropriées.

Aussi, à des fins d'allègement de l'anneau polygonal 17, les zones planes 31, intermédiaires entre deux bagues consécutives, sont pourvues d'évidements traversants ou ouvertures 33 qui sont délimités par les parois latérales 25 des bagues consécutives et par les portions correspondantes des flancs annulaires d'extrémité 20, 21 de l'anneau. Ces évidements 33 sont ainsi alternés avec les bagues 23 en périphérie latérale 19 de l'anneau polygonal formant le moyeu 16 de l'hélice. Et deux de ces évidements traversants 33, tels que réalisés actuellement, sont montrés sur le détail D de la figure 2, avec les zones d'enracinement 30 (l'une est seulement visible) solidarisant diamétralement la bague 23 aux flancs annulaires 20, 21. On voit que l'épaisseur ou largeur de la zone représentée est importante entraînant, comme on l'a rappelé précédemment, une ovalisation de la bague à cause des efforts de traction exercés par les flancs sur celle-ci.

Conformément à l'invention, des éléments de renfort 26 sont prévus dans les évidements traversants 33 pour éviter la déformation des bagues 23 et, notamment, leur ovalisation suite aux efforts intenses qui s'exercent sur celles-ci. Pour cela, dans le mode de réalisation illustré en regard des figures 2 à 4, les éléments de renfort 26 sont agencés radialement et sont associés rigidement aux parois latérales 25 de deux bagues consécutives 23 en agissant sur ces parois latérales de manière perpendiculaire aux zones d'enracinement diamétrales 30 des bagues 25 avec les flancs annulaires d'extrémité 20, 21 de l'anneau, c'est-à-dire là où le risque d'ovalisation est important. On remarque que, contrairement aux zones d'enracinement antérieures 30 à large épaisseur comme celle illustrée dans la loupe D de la figure 2, les autres zones 30 de l'anneau ont une épaisseur réduite e (figure 3), de l'ordre de celle des bagues ou des éléments de renfort, ce qui limite fortement les efforts exercés par les flancs sur les bagues 23 et, donc, leur ovalisation. Et les éléments de renfort 26 s'opposent au mouvement pendulaire dû aux pales, risquant de s'amplifier par la diminution de l'étendue e des zones d'enracinement 30, et suppriment le risque de déformation au niveau des zones d'enracinement alors réduites en contribuant à rigidifier les bagues.

Dans ce mode, les éléments de renfort 26 sont définis par des plaques minces rigides 27 disposées chacune dans un évidement traversant 33 et situées dans le plan médian radial de l'anneau polygonal 17, c'est-à-dire, comme le montrent les figures 2 et 4, le plan perpendiculaire à l'axe longitudinal A de la turbomachine et contenant les axes géométriques B des logements cylindriques de réception 24, des pales, à égale distance des deux flancs annulaires d'extrémité 20, 21 de l'anneau. Comme on le voit sur les figures 2 et 3, les plaques minces rigides 27 ainsi agencées radialement empêchent la déformation des zones d'enracinement d'épaisseur réduite et des parois latérales 25 des bagues 23, notamment celle des pistes de roulement des paliers pour la rotation des pales. L'ensemble de ces plaques minces 27 définit ainsi un disque de reprise des efforts, formé d'une pluralité de nervures de raidissement. Pour empêcher toute déformation, chaque plaque rigide mince 27 s'étend sur toute la hauteur des bagues 23, les bords latéraux 28 des plaques étant solidaires des parois 25 des bagues.

Ainsi, par l'agencement de ces éléments de renfort 26 et des zones 30 d'épaisseur réduite, la non déformation des logements des bagues, ainsi que la tenue de l'anneau en général aux différents efforts de fonctionnement, sont renforcées en évitant en finalité la détérioration des pistes de roulement des paliers prévus entre les logements des bagues et les dispositifs de montage rotatifs 29, puisque la paroi latérale 25 de chaque bague 23 est « supportée » par quatre liaisons perpendiculaires (deux zones de liaison 30 et deux éléments de renfort 26).

De plus, le fait d'ajouter des plaques minces 27 pour supprimer le risque de déformation des zones d'enracinement réduites et rigidifier les bagues ne contribue pas à augmenter significativement la masse du moyeu 16 de l'hélice 7 d'autant plus que les zones d'enracinement 30 sont réduites.

Comme on l'a rappelé précédemment, l'anneau polygonal 17 est obtenu directement par des techniques appropriées, de sorte que les flancs annulaires d'extrémité 20, 21, les bagues 23 et les éléments de renfort 26 ne constituent qu'une seule et même pièce. Cependant, on pourrait envisager de rapporter par assemblage, soudage ou autre, les plaques minces rigides entre les parois latérales des bagues.

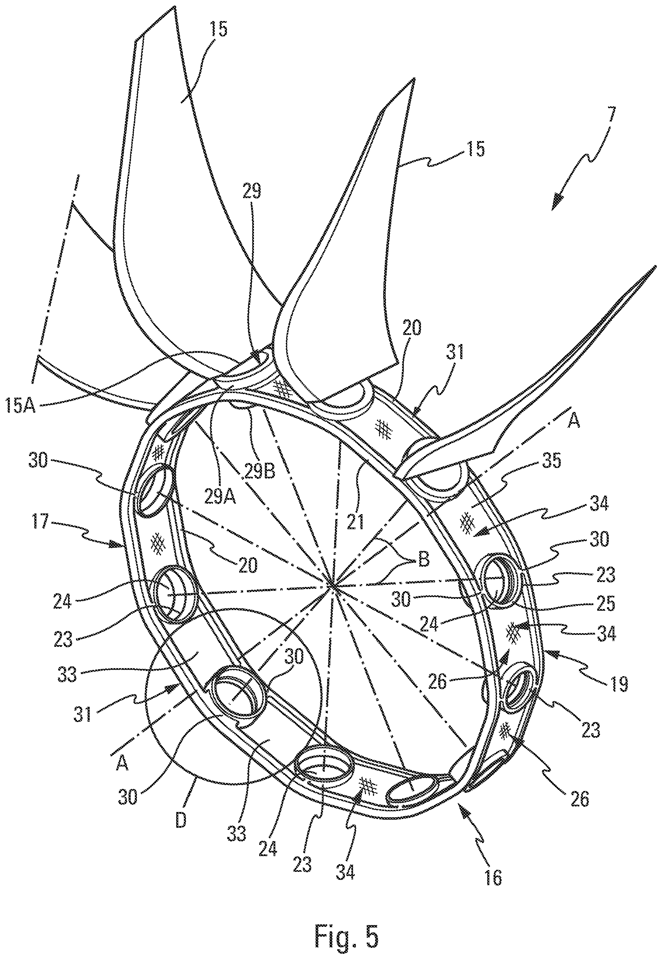

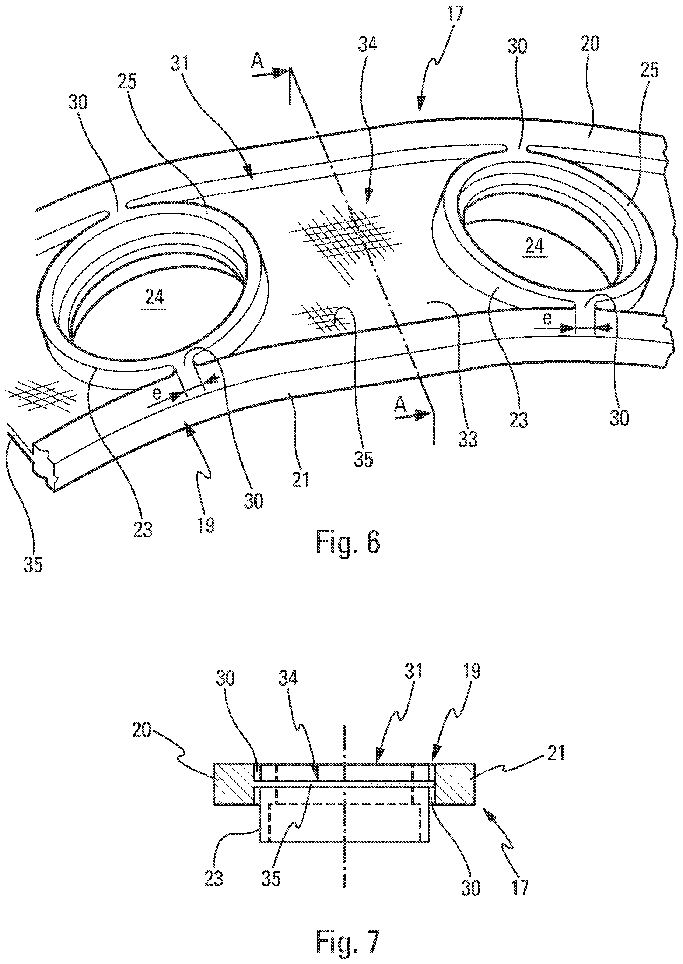

On décrira ci-après un autre mode de réalisation des éléments de renfort 26 illustré en regard des figures 5 à 7. Préalablement, les dispositifs de montage 29 des pales sont identiques à la réalisation précédente. Brièvement, à chaque dispositif correspond une platine 29A qui porte d'un côté, par une articulation à axe, une liaison tenon-mortaise ou autre, le pied 15A de la pale 15, tandis qu'elle s'engage, de l'autre côté, depuis l'extérieur de l'anneau polygonal, dans le logement 24 de la bague 23. Une pièce en couronne 29B est montée également dans le logement 24, mais depuis l'intérieur de l'anneau polygonal 17 pour se fixer à la platine et immobiliser celle-ci axialement, et des paliers non représentés, prévus dans le logement, entre la platine et la couronne, assurent la rotation, par des moyens appropriés non illustrés, de la platine par rapport au logement de l'anneau polygonal pour modifier le calage des pales.

Les parois latérales 25 des bagues cylindriques 23 sont solidaires des flancs annulaires d'extrémité 20,21 par les zones d'enracinement ou de liaison 30 prévues en opposition diamétrale sur la périphérie latérale 19 de l'anneau polygonal 17. La hauteur de ces zones 30 est de préférence identique à celle des flancs annulaires d'extrémité. On voit par ailleurs, sur la figure 5, que les logements de réception 24 des dispositifs de montage 29 des pales 15 sont situés, comme précédemment, aux sommets d'intersection des zones intermédiaires planes 31 composant la périphérie latérale polygonale 19 de l'anneau. L'obtention de ce dernier s'effectue d'un seul tenant et est réalisée notamment par des techniques de laminage et d'usinage appropriées.

Alors que dans les réalisations précédentes montrées partiellement sur le détail D de la figure 5, les zones intermédiaires planes 31 de la périphérie latérale 19 de l'anneau polygonal 17 comprennent des évidements traversants ou ouvertures 33, sans matière, entre les flancs annulaires d'extrémité 20, 21 et les bagues cylindriques 23, ces zones intermédiaires planes 31 sont pleines et continues. Pour cela, les évidements 33 sont pourvus d'éléments de renfort 26 qui sont, dans ce mode, tangentiels et qui se présentent, chacun, sous la forme d'un voile ou feuille de matière 34 à paroi mince 35, comme le montrent les figures 5 à 7. L'ensemble de ces voiles 34 à paroi mince 35 constitue ainsi, en périphérie latérale 19 de l'anneau polygonal, une cloison de séparation tangentielle entre le côté intérieur de l'anneau polygonal 17, qui est tourné vers les turbines 5, 6 de la turbomachine 1, et le côté extérieur qui est tourné, quant à lui, vers les pales 15 de l'hélice 7. On comprend donc que cette cloison de séparation permet de canaliser et ainsi d'isoler thermiquement le flux gazeux chaud des circuits de ventilation de la turbine basse pression 5 en évitant qu'il ne passe comme précédemment par les évidements traversants et n'échauffe démesurément les pieds 15A des pales 15 de l'hélice, particulièrement lorsque ces derniers sont réalisés en matériau composite, beaucoup plus sensible à la chaleur que les matériaux métalliques.

Outre le fait de canaliser le flux de ventilation chaud, on peut obtenir une ventilation appropriée aux pieds des pales de l'hélice à partir de l'air de la veine.

Ainsi, on conserve une température adéquate pour les pieds des pales au niveau de l'extérieur de l'anneau polygonal 17, sans entraîner un réchauffement de ceux-ci.

Structurellement, les voiles de matière 34 sont obtenus directement lors de la réalisation de l'anneau polygonal 17. Ils pourraient bien entendu être rapportés ultérieurement. On remarque, notamment sur la figure 4, que le voile de matière 34 a une épaisseur minimale pour ne pas contribuer à augmenter la masse de l'anneau polygonal.

Bien que les éléments de renfort 26 à voiles minces 34 soient situés sensiblement au milieu de l'épaisseur de l'anneau polygonal 17, ils pourraient bien entendu se trouver à un autre emplacement, entre les côtés extérieur et intérieur de l'anneau polygonal, sans sortir de l'invention.

On constate également, comme précédemment, sur le détail D de la figure 5, que les zones d'enracinement 30 ont une épaisseur importante, couvrant une portion périphérique significative des bagues. En revanche, avec l'agencement des voiles 34 dans les zones intermédiaires 31, les zones d'enracinement 30 ont une épaisseur réduite e (figures 2 et 3), amplifiant quelque peu les zones intermédiaires. L'épaisseur e peut être de l'ordre de celle de la paroi latérale des bagues. Comme on l'a rappelé précédemment, la diminution de l'épaisseur des zones d'enracinement conduit notamment à réduire l'influence des efforts de traction exercés par les flancs sur les bagues et, donc, à supprimer le risque d'ovalisation de celles-ci, et l'opposition au mouvement pendulaire dû aux pales, risquant de déformer les zones d'enracinement alors réduites, est contrée par la présence des voiles tangentiels 34 qui obturent et rigidifient la périphérie latérale de l'anneau polygonal.

En variante, dans un autre mode de réalisation, chaque élément de renfort 26 pourrait avoir une section transversale en forme de croix, de la manière représentée par exemple sur la figure 8. Une première plaque rigide mince 27A est ainsi disposée de façon identique à la précédente réalisation des figures 2 à 4, tandis qu'une seconde plaque mince 27B faisant office de voile, perpendiculaire à la première et issue de chaque côté de celle-ci, s'étend tangentiellement dans l'évidement traversant correspondant 33 jusqu'à venir contre les flancs annulaires d'extrémité 20, 21 et la paroi des bagues 23, comme sur la réalisation des figures 5 à 7.

Ainsi, les évidements traversants 33 en périphérie latérale 19 de l'anneau polygonal 17 sont totalement obturés, l'ensemble des éléments de renfort 26 en forme de croix contribuant à rigidifier encore les bagues et l'anneau 17 en général, et également à isoler thermiquement le côté extérieur du moyeu 16, où se trouvent les pales 15, du côté intérieur, où se trouvent les turbines. Ainsi, le flux des gaz chauds de ventilation circulant dans la turbomachine est canalisé du côté intérieur du moyeu à anneau polygonal et ne passe plus par les évidements traversants, en risquant de provoquer une surchauffe du pied des pales de l'hélice, particulièrement critique lorsque celles-ci sont réalisées en matériau composite.

## Revendications

1. Moyeu d'hélice à pales à calage variable pour une turbomachine à axe longitudinal, du type comportant :
- un anneau polygonal (17) de support des pales (15), concentrique à l'axe longitudinal et composé de deux flancs annulaires d'extrémité (20, 21) espacés parallèlement l'un de l'autre et entre lesquels sont diamétralement solidarisées, par des zones d'enracinement (30) issues desdits flancs annulaires, des bagues (23) à logements cylindriques radiaux (24) pour la réception des pales, lesdites bagues (23) étant équi-angulairement réparties en périphérie latérale de l'anneau polygonal et séparées les unes des autres par des zones intermédiaires (31), et
- un moyen de liaison (18) reliant l'anneau polygonal (17) à un élément de rotor de turbine de la turbomachine,
**caractérisé par le fait que** les zones intermédiaires (31), définies entre deux bagues consécutives et les flancs annulaires d'extrémité, sont pourvues d'évidements (33) traversants et comportent des éléments de renfort (26) des bagues (23), qui sont agencés radialement et/ou tangentiellement et solidaires au moins des parois latérales des deux bagues consécutives.

2. Moyeu selon la revendication 1, dont lesdits éléments de renfort (26), lorsqu'ils sont agencés radialement, sensiblement parallèlement auxdits flancs annulaires d'extrémité, se présentent chacun sous la forme d'une plaque (27), disposée radialement dans l'évidement traversant (33) et solidaire, par ses bords latéraux (28), des parois latérales correspondantes (25) des deux bagues consécutives.

3. Moyeu selon la revendication 2, dont lesdites zones d'enracinement (30) des flancs annulaires d'extrémité (20, 21) sur les bagues (23) ont une épaisseur (e), sensiblement de l'ordre de celle desdits éléments de renfort (26) ou de celle desdites bagues (23).

4. Moyeu selon l'une des revendications 2 ou 3, dont les éléments de renfort (26) à plaques (27) des bagues (23) sont situés dans le plan médian radial de l'anneau polygonal, perpendiculaire à l'axe longitudinal (A) et contenant les axes géométriques (B) des logements cylindriques radiaux (24) de réception des pales, et à égale distance des deux flancs annulaires d'extrémité (20, 21) de l'anneau polygonal.

5. Moyeu selon l'une des revendications 2 à 4, dont les éléments de renfort (26) à plaques (27) s'étendent radialement sur toute la hauteur desdites bagues (23).

6. Moyeu d'hélice à pales à calage variable pour une turbomachine à axe longitudinal, du type comportant :
- un anneau polygonal (17) de support des pales (15), concentrique à l'axe longitudinal et composé de deux flancs annulaires d'extrémité (20, 21) espacés parallèlement l'un de l'autre et entre lesquels sont diamétralement solidarisées, par des zones d'enracinement (30) issues desdits flancs annulaires, des bagues (23) à logements cylindriques radiaux (24) pour la réception des pales, lesdites bagues (23) étant équi-angulairement réparties en périphérie latérale de l'anneau polygonal et séparées les unes des autres par des zones intermédiaires (31), et
- un moyen de liaison (18) reliant l'anneau polygonal (17) à un élément de rotor de turbine de la turbomachine,
**caractérisé par le fait que** les zones intermédiaires (31), définies entre deux bagues (23) consécutives et les flancs annulaires d'extrémité (20, 21), sont pourvues d'évidements (33) délimités par les parois latérales des bagues (23) et par les portions correspondantes des flancs annulaires d'extrémité (20, 21), et comportent des éléments de renfort (26), agencés tangentiellement qui obturent lesdits évidements (33), ladite périphérie latérale (19) dudit anneau polygonal étant sensiblement pleine et continue, les éléments de renfort (26) se présentant sous la forme d'un voile de matière (34) à paroi mince par rapport à la hauteur des flancs annulaires d'extrémité (20, 21) et obturant la périphérie latérale (19) de l'anneau polygonal (17).

7. Moyeu selon la revendication 6, dont lesdits voiles (34) sont situés sensiblement au milieu de l'épaisseur dudit anneau polygonal (17).

8. Moyeu selon l'une quelconque des revendications 6 à 7, dont lesdites zones d'enracinement (30) issues des flancs annulaires (20, 21) et reliant diamétralement les bagues (23) ont une épaisseur (e), sensiblement de l'ordre de celle desdites bagues (23).

9. Moyeu selon la revendication 6, dont chaque élément de renfort (26) se présente sous la forme de deux plaques (27A, 27B), perpendiculaires l'une par rapport à l'autre en définissant une section transversale en croix, l'une (27A) desdites plaques étant agencée radialement dans ledit évidement (33) en reliant les deux bagues correspondantes, et l'autre plaque perpendiculaire (27B) étant agencée tangentiellement en périphérie latérale (19) de l'anneau polygonal en reliant lesdits flancs annulaires d'extrémité de l'anneau pour obturer ledit évidement traversant.

10. Moyeu selon l'une quelconque des revendications 1 à 9, dont lesdits éléments de renfort (26) sont intégrés audit anneau polygonal (17) ou sont rapportés fixement à l'anneau polygonal (17).

11. Turbomachine (1) du type à soufflante non carénée, **caractérisée en ce qu'**elle comprend au moins un moyeu (16) d'hélice de ladite soufflante, tel que défini dans l'une quelconque des revendications précédentes 1 à 10.

## Patentansprüche

1. Nabe für einen Propeller mit variabel einstellbaren Schaufeln für eine Turbomaschine mit einer Längsachse von dem Typ, der umfasst:
- einen polygonalen Ring (17) zum Tragen der Schaufeln (15), der konzentrisch zu der Längsachse ist und aus zwei ringförmigen Endflanschen (20, 21) zusammengesetzt ist, die im Abstand parallel zueinander verlaufen und zwischen denen diametral durch Verankerungsbereiche (30), die von den ringförmigen Seitenwänden stammen, Ringe (23) mit radialen zylindrischen Aufnahmen (24) zur Aufnahme von den Schaufeln fest verbunden sind, wobei die Ringe (23) um den seitlichen Umfang des polygonalen Rings im gleichen Winkelabstand verteilt sind und voneinander durch Zwischenbereiche (31) getrennt sind, und
- ein Verbindungsmittel (18) , das den polygonalen Ring (17) mit einem Element des Turbinenrotors der Turbomaschine verbindet,
**dadurch gekennzeichnet, dass** die Zwischenbereiche (31), die zwischen zwei aufeinanderfolgenden Ringen und den ringförmigen Endflanschen definiert sind, mit durchgehenden Ausnehmungen (33) versehen sind und Verstärkungselemente (26) der Ringe (23) umfassen, die radial und / oder tangential angeordnet sind, und zumindest mit den Seitenwänden von zwei aufeinanderfolgenden Ringen fest verbunden sind.

2. Nabe nach Anspruch 1, wobei die Verstärkungselemente (26), wenn sie radial im Wesentlichen parallel zu dem ringförmigen Endflanschen angeordnet sind, jeweils in Form einer dünnen starren Platte (27) ausgebildet sind, die radial in der durchgehenden die Ausnehmung (33) vorgesehen ist und durch seine seitlichen Ränder (28) mit den entsprechenden Seitenwänden (25) von zwei aufeinanderfolgenden Ringen fest verbunden ist.

3. Nabe nach Anspruch 2, wobei die Verankerungsbereiche (30) der ringförmigen Endflansche (20, 21) an den Ringen (23) eine Dicke (e) haben, die im Wesentlichen in der Größenordnung von derjenigen der Verstärkungselemente (26) oder derjenigen der Ringe (23) ist.

4. Nabe nach einem der Ansprüche 2 oder 3, wobei die als Platten (27) ausgebildeten Verstärkungselemente (26) der Ringe (23) in der radialen Mittelebene des polygonalen Rings, die senkrecht zu der Längsachse (A) ist und die geometrischen Achsen (B) der radialen zylindrischen Aufnahmen (24) zum Aufnehmen der Schaufeln enthält, und in dem gleichen Abstand von den beiden ringförmigen Endkanten (20, 21) des polygonalen Rings angeordnet sind.

5. Nabe nach einem der Ansprüche 2 bis 4, wobei die als Platten (27) ausgebildeten Verstärkungselemente (26) sich radial über die gesamte Höhe der Ringe (23) erstrecken.

6. Nabe für einen Propeller mit variabel einstellbaren Schaufeln für eine Turbomaschine mit einer Längsachse von dem Typ, der umfasst:
- einen polygonalen Ring (17) zum Tragen der Schaufeln (15), der konzentrisch zu der Längsachse ist und aus zwei ringförmigen Endflanschen (20, 21) zusammengesetzt ist, die im Abstand parallel zueinander verlaufen und zwischen denen diametral durch Verankerungsbereiche (30), die von den ringförmigen Seitenwänden stammen, Ringe (23) mit radialen zylindrischen Aufnahmen (24) zur Aufnahme von den Schaufeln fest verbunden sind, wobei die Ringe (23) um den seitlichen Umfang des polygonalen Rings im gleichen Winkelabstand verteilt sind und voneinander durch Zwischenbereiche (31) getrennt sind, und
- ein Verbindungsmittel (18), das den polygonalen Ring (17) mit einem Element des Turbinenrotors der Turbomaschine verbindet,
**dadurch gekennzeichnet, dass** die Zwischenbereiche (31), die zwischen zwei aufeinanderfolgenden Ringen (23) und den ringförmigen Endflanschen (20, 21) definiert sind, mit durchgehenden Ausnehmungen (33) versehen sind, die von Seitenwänden des Rings (23) und den entsprechenden Abschnitten der ringförmigen Endflansche (20, 21) begrenzt sind, und tangential angeordnete Verstärkungselemente (26) umfassen, die die Ausnehmungen (33) verschließen, wobei der seitliche Umfang (19) des polygonalen Rings im Wesentlichen massiv und kontinuierlich ist, wobei die Verstärkungselemente (26) in der Form einer Umhüllung (34) aus Material mit einer dünnen Wand mit Bezug auf die Höhe der ringförmigen Endkanten (20, 21) sind und den seitlichen Umfang (19) des polygonalen Rings (17) verschließen.

7. Nabe nach Anspruch 6, wobei die Umhüllungen (34) im Wesentlichen in der Mitte der Dicke des polygonalen Rings (17) angeordnet sind.

8. Nabe nach einem der Ansprüche 6 bis 7, wobei die Verankerungsbereiche (30), die von den ringförmigen Flanschen (20, 21) stammen und diametral die Ringe (23) verbinden, eine Dicke (e) haben, die im Wesentlichen in der Größenordnung von derjenigen der Ringe (23) ist.

9. Nabe nach Anspruch 6, wobei jedes Verstärkungselement (26) in Form von zwei Platten (27A, 27B) ausgebildet ist, die senkrecht relativ zueinander sind, wobei sie einen kreuzförmigen Querschnitt definieren, wobei die eine (27A) der Platten radial in der Ausnehmung (33) angeordnet ist, wobei sie die entsprechenden Ringe verbindet, und wobei die andere senkrechte Platte (27B) tangential am seitlichen Umfang (19) des polygonalen Rings angeordnet ist, wobei sie die ringförmigen Endflansche des Rings verbindet, um die durchgehende Ausnehmung zu verschließen.

10. Nabe nach einem der Ansprüche 1 bis 9, wobei die Verstärkungselemente (26) in dem polygonförmigen Ring (17) integriert sind oder fest an dem polygonförmigen Ring (17) angestückelt sind.

11. Turbomaschine (1) des Typs mit nicht stromlinienförmigem Gebläse, **dadurch gekennzeichnet, dass** sie mindestens eine Nabe (16) für einen Propeller des Gebläses umfasst, wie sie in einem der vorhergehenden Ansprüche 1 bis 10 definiert ist.

## Claims

1. A variable pitch blade propeller hub for a turbomachine with a longitudinal axis, of the type including:
- a polygonal ring (17) supporting the blades (15), concentric with the longitudinal axis and composed of two spaced parallel annular end flanges (20, 21) between which are diametrically fastened, by root areas (30) arising from said annular flanges, collars (23) with cylindrical radial housings (24) to receive the blades, said collars (23) being equi-angularly distributed at the lateral periphery of the polygonal ring and separated from each other by intermediate areas (31), and
- connecting means (18) connecting the polygonal ring (17) to a turbine rotor element of the turbomachine,
**characterized in that** the intermediate areas (31) defined between two concentric collars and the annular end flanges are provided with through-openings (33) and include elements (26) for reinforcing the collars (23) that are arranged radially and/or tangentially and fastened at least to the lateral walls of two consecutive collars.

2. The hub as claimed in claim 1, said reinforcing elements (26) whereof, when they are arranged radially, substantially parallel to said annular end flanges, each take the form of a thin rigid plate (27) disposed radially in the through-opening (33) and fastened by its lateral edges (28) to the corresponding lateral walls (25) of two consecutive collars.

3. The hub as claimed in claim 2, said root areas (30) of the annular end flanges (20, 21) whereof on the collars (23) have a small thickness (e) of substantially the same order as that of said reinforcing elements (26) or that of said collars (23).

4. The hub as claimed in either of claims 2 or 3, the reinforcing elements (26) with plates (27) of the collars (23) whereof are situated in the median radial plane of the polygonal ring, perpendicular to the longitudinal axis (A) and containing the geometrical axes (B) of the cylindrical radial housings (24) receiving the blades, and equidistant from the two annular end flanges (20, 21) of the polygonal ring.

5. The hub as claimed in any one of claims 2 to 4, the reinforcing elements (26) whereof with plates (27) extend radially over the full height of said collars (23).

6. A variable pitch blade propeller hub for a turbomachine with a longitudinal axis, of the type including:
- a polygonal ring (17) supporting the blades (15), concentric with the longitudinal axis and composed of two spaced parallel annular end flanges (20, 21) between which are diametrically fastened, by root areas (30) arising from said annular flanges, collars (23) with cylindrical radial housings (24) to receive the blades, said collars (23) being equi-angularly distributed at the lateral periphery of the polygonal ring and separated from each other by intermediate areas (31), and
- connecting means (18) connecting the polygonal ring (17) to a turbine rotor element of the turbomachine,
**characterized in that** the intermediate areas (31) defined between two concentric collars and the annular end flanges are provided with openings (33) defined by the lateral walls of the collars (23) and by the corresponding portion of the annular end flanges (20, 21), and comprise reinforcing elements (26) arranged tangentially which block the openings (33), said lateral periphery (19) of said polygonal ring being substantially solid and continuous, the reinforcing elements (26) taking the form of a thin material web (34) with regard to the height of the annular end flanges (20, 21) and blocking the lateral periphery (19) of the polygonal ring (17).

7. The hub as claimed in claim 6, said thin webs (34) whereof are situated substantially in the middle of the thickness of said polygonal ring (17).

8. The hub as claimed in any one of claims 6 to 7, said root areas (30) whereof arising from the annular flanges (20, 21) and diametrically connecting the collars (23) have a small thickness (e) of substantially the same order as that of said collars (23).

9. The hub as claimed in claim 6, each reinforcing element (26) whereof takes the form of two thin rigid plates (27A, 27B) perpendicular to each other and defining a cruciform cross section, one plate (27A) being arranged radially in said opening (33) and connecting the corresponding two collars and the other plate (27B) perpendicular thereto being arranged tangentially at the lateral periphery (19) of the polygonal ring and connecting said annular end flanges of the collar to block said through-opening.

10. The hub as claimed in any one of claims 1 to 9, said reinforcing elements (26) whereof are integral with said polygonal ring (17) or fixedly attached to the polygonal ring (17).

11. A turbomachine (1) of the unducted fan type, **characterized in that** it comprises at least one propeller hub (16) as defined in any one of the preceding claims 1 to 10.
